# EUROPÄISCHE PATENTSCHRIFT

(11) **EP 2 114 832 B1**
(45) Veröffentlichungstag und Bekanntmachung des Hinweises auf die Patenterteilung: **29.02.2012**
(21) Anmeldenummer: 08707829.1
(22) Anmeldetag: 07.01.2008
(51) Int. Cl.: C02F 9/00, C02F 1/52, C02F 1/44, C02F 1/00, C02F 101/10, C02F 101/20, C02F 103/10

(54) **VERFAHREN UND VORRICHTUNG ZUR REINIGUNG VON MIT SULFAT-IONEN UND SCHWERMETALL-IONEN VERUNREINIGTEM WASSER**
PROCESS AND DEVICE FOR PURIFYING WATER CONTAMINATED WITH SULPHATE IONS AND HEAVY METAL IONS
PROCÉDÉ ET DISPOSITIF DE PURIFICATION D'EAU CONTENANT DES IMPURETÉS SOUS FORME D'IONS SULFATE ET D'IONS DE MÉTAL LOURD

(30) Priorität: 29.01.2007 DE 102007004310
(43) Veröffentlichungstag der Anmeldung: 11.11.2009
(73) Patentinhaber: Siemens Aktiengesellschaft, 80333 München (DE)
(72) Erfinder: RIEBENSAHM, Michael, Santiago de Chile (CL)
(86) Internationale Anmeldenummer: PCT/EP2008/050090
(87) Internationale Veröffentlichungsnummer: WO 2008/092713

(56) Entgegenhaltungen:
- EP-A- 0 622 338
- EP-A- 1 293 485
- WO-A-2004/103918
- DE-A1- 3 305 800
- US-A- 4 046 686
- US-A- 4 655 928
- US-A- 5 266 210
- US-A- 5 807 486
- US-A- 5 855 793
- HUANG Y-C ET AL: "SEPARATION OF HEAVY METALS FROM INDUSTRIAL WASTE STREAMS BY MEMBRANE SEPARATION TECHNOLOGY" WASTE MANAGEMENT, ELSEVIER, NEW YORK, NY, US, Bd. 13, Nr. 5/7, Januar 1993 (1993-01), Seiten 481-501, XP000415216 ISSN: 0956-053X

## Beschreibung

Die Erfindung betrifft ein Verfahren und eine Vorrichtung zur Reinigung von mit Sulfat-Ionen und Schwermetall-Ionen verunreinigtem Wasser.

Die vorliegende Erfindung liegt auf dem technischen Gebiet der Wasserreinigung bzw. Wasseraufbereitung. Die Wasseraufbereitung ist in vielen Lebensbereichen des Privat- und Wirtschaftslebens heute von großer Bedeutung. Zunehmend sind auch gesetzliche Umweltauflagen und Gesundheitsauflagen einzuhalten. Das erfindungsgemäße Verfahren und die erfindungsgemäße Vorrichtung können insbesondere vorteilhaft eingesetzt werden im Bereich der Beseitigung von Acid-Rock-Drainage, welche bei der industriellen Förderung von Rohstoffen im Tagebau auftreten kann. Bei der Acid-Rock-Drainage handelt es sich um Abwasser mit einem pH-Wert deutlich kleiner sieben, d.h. um eine saure Lösung, welches zudem in der Regel im Wasser gelöste Schwermetall-Ionen aufweist.

Acid-Rock-Drainage entsteht durch Wasser, bspw. in Form von Regen oder Schnee, welches eine beim Bergbau anfallende Halde durchsickert. Kommt Bodenreich bzw. Fördergut, bspw. auf einer Abraumhalde, mit Wasser, bspw. Regenwasser oder Schmelzwasser, und Luft, insbesondere Sauerstoff, in Kontakt, so kommt es zu chemischen Reaktionen, deren Folge letztendlich die Entstehung von Schwefelsäure ist. Die Schwefelsäure löst beim Durchsickern des Bodenreichs bzw. Förderguts Schwermetalle aus dem Boden bzw. aus dem deponierten Fördergut. Über natürliche Drainagen bzw. Kanäle sammelt sich die in der Regel schwermetallhaltige und saure Lösung in einer natürlichen Senke oder läuft ungereinigt in einen Fluss.

Das mit Sulfat-Ionen und Schwermetallen verunreinigte Wasser wirkt in der Regel toxisch auf lebende Organismen. Eine Entfernung der Sulfat-Ionen und der Schwermetall-Ionen aus der wässrigen Lösung ist daher erforderlich und zweckmäßig.

Die US 4,046,686 offenbart ein Verfahren und eine Vorrichtung zur Reinigung von Batterieabwässern umfassend Wasser, Schwefelsäure, gelöste Metalle in ppm-Konzentration und Natrium. Diese werden in einem Auffangbecken gesammelt, ein teil davon entnommen und mit Kalziumhydroxid in Wasser vermischt und neutralisiert. Es fällt eine Fällungssubstanz (Kalziumsulfat und Schwermetallhydroxide) aus, deren Flockung durch Zugabe eines Polyelektrolyten und von Luft verbessert wird. Es erfolgt eine Einleitung der Mischung in ein Klärbecken mit trichterförmigem Bodenbereich. Die gebildeten Flocken der Fällungssubstanz setzen sich ab und werden als Schlamm im Bodenbereich abgezogen und getrocknet, während die Überstandsflüssigkeit in einen Speichertank überführt wird. Anschließend erfolgt eine Filterung der Überstandflüssigkeit durch eine Sandfilter-Batterie und Umkehrosmose. Es erfolgt eine zeitweise Reinigung der Sandfilter-Batterie durch Rückwaschen, wobei Frischwasser entgegen der Filtrationsrichtung hindurchgeleitet wird, das anschließend mit den ggf. aus den Filtern ausgewaschenen Feststoffpartikeln in Richtung Auffangbecken geleitet wird. Das Filtrat aus dem Überstandswasser wird mit einem Komplexbildner versetzt und damit eine Ausfällung von Fällungssubstanzen während der nachfolgenden Umkehrosmose verhindert. Anschließend wird das Gemisch der Umkehrosmose unterzogen, wobei Reinwasser abgetrennt wird. Das verbleibende Schmutzwasser enthaltend abgesondertes Kalzium wird zur Zerstörung des Komplexbildners entweder mit Kalziumoxid vermischt und dem Auffangbecken zugeführt oder zur Lösung von Kalziumoxid bei der Bildung des benötigten Kalziumhydroxids in Wasser eingesetzt. Es fällt in beiden Fällen Kalziumphosphat und Kalziumsulfat aus, das zusammen mit dem gebildeten Kalziumhydroxid in Wasser den Batterieabwässern insgesamt oder einem neuen abgetrennten Teil der Batterieabwässer beigemischt wird.

Der Erfindung liegt die Aufgabe zugrunde, eine Vorrichtung und ein Verfahren bereit zu stellen, mit welchem eine technisch wenig aufwendige und eine kostengünstige Reinigung des mit Sulfat-Ionen und Schwermetall-Ionen verunreinigten Wassers möglich ist.

Der das Verfahren betreffende Teil der Aufgabe wird gelöst durch ein Verfahren zur Reinigung von mit Sulfat-Ionen und Schwermetall-Ionen verunreinigtem Wasser, wobei das Wasser in einem Wasserreservoir gesammelt wird und dem Wasser im Wasserreservoir eine in Wasser basisch wirkende Substanz in einer einen pH-Wert des Wassers erhöhenden Menge zugeführt wird, sodass eine Schwermetall-Ionen aufweisende Fällungssubstanz aus dem Wasser ausgefällt wird, wobei wenigstens eine Wasserteilmenge aus dem Wasserreservoir entnommen und mittels einer Filtereinrichtung in von Sulfat-Ionen und Schwermetall-Ionen im wesentlichen befreites Reinwasser und in mit Sulfat-Ionen und Schwermetall-Ionen angereichertes Schmutzwasser getrennt wird, und wobei das Schmutzwasser wenigstens teilweise in das Wasserreservoir zurückgeführt wird, wodurch sich eine Konzentration von Sulfat-Ionen in dem Wasserreservoir erhöht und nach Erreichen der Löslichkeitsgrenze eine Sulfat-Ionen aufweisende Fällungssubstanz aus dem Wasser ausgefällt wird.

Unter Wasserreservoir wird im Rahmen dieser Anmeldung eine natürliche und/oder künstliche Aufnahme samt dem in der Aufnahme vorliegenden Wasser verstanden.

Das erfindungsgemäße Verfahren kann insbesondere vorteilhaft für Abwässer eingesetzt werden, welche beim Abbau von Rohstoffen in Minen, insbesondere mit schwefelhaltigem, Bodenreich auftreten. Doch ist das erfindungsgemäße Verfahren nicht auf eine derartige Anwendung beschränkt. Vielmehr kann dieses Verfahren für die Wasseraufbereitung im Allgemeinen verwendet werden, wenn Schwermetall-Ionen und/oder Sulfat-Ionen im Wasser vorliegen.

Bei dem Verfahren wird dem verunreinigten Wasser eine in Wasser basisch wirkende Substanz zugeführt, um den pH-Wert des Wassers in dem Wasserreservoir zu heben. Durch die Veränderung des pH-Werts im Wasser, insbesondere durch die Entfernung von Oxonium-Ionen aus dem Wasser, kommt es zu einer Verschiebung des chemischen Gleichgewichts der in dem verunreinigten Wasser gelösten Schwermetall-Ionen und Hydroxid-Ionen. Durch die Verschiebung des chemischen Gleichgewichts durch die Zuführung einer in Wasser basisch wirkenden Substanz, d.h. eines Hydroxid-Ionen-Donators bzw. eines Protonen-Aktzeptors, wird eine Ausfällung einer Schwermetall-Ionen aufweisenden Verbindung, in der Regel eine Schwermetallhydroxid-Verbindung, bewirkt.

Die Konzentration der in dem verunreinigten Wasser gelösten Schwermetall-Ionen wird durch Ausfällung der Schwermetall-Ionen aufweisenden Fällungssubstanz verringert. Die Schwermetall-Ionen-haltige Fällungssubstanz sinkt in der Regel nach unten und lagert sich in der Regel an einer Begrenzung, bspw. dem Boden, des Wasserreservoirs ab. Vorzugsweise wird die in Wasser basisch wirkende Substanz dem Wasserreservoir kontinuierlich zugeführt.

Vorteilhafter Weise wird eine Wasserteilmenge aus dem Wasserreservoir entnommen, welche bereits eine reduzierte Schwermetall-Ionen-Konzentration aufweist, welche durch die obige Fällungsreaktion reduziert wurde. Die entnommene Wasserteilmenge wird in Reinwasser, welches im Wesentlichen von Sulfat-Ionen und Schwermetall-Ionen befreit ist und in Schmutzwasser, welches mit Sulfat-Ionen und Schwermetall-Ionen angereichert wird, getrennt. Dies geschieht in der Regel mittels einer dazu geeigneten Filtereinrichtung.

Nach der Filterung der Wasserteilmenge in Reinwasser und Schmutzwasser wird das Schmutzwasser wieder zurück in das Wasserreservoir geführt. Vorzugsweise parallel findet weiterhin die Zuführung der im Wasser basisch wirkenden Substanz in Wasser statt. Aufgrund der Erhöhung der Sulfat-Ionen-Konzentration im Schmutzwasser im Vergleich zur Sulfat-Ionen-Konzentration in der ursprünglich aus dem Wasserreservoir entnommenen Wasserteilmenge kommt es nun durch die Rückführung des Schmutzwassers in das Wasserreservoir zu einer in der Regel stetigen Erhöhung der Sulfat-Ionen-Konzentration im Wasserreservoir.

Durch die vorteilhafter Weise kontinuierlich ausgeführte Wasserentnahme und der daran anschließenden Filterung der Wasserteilmenge in Reinwasser und Schmutzwasser steigt die Sulfat-Ionen-Konzentration über eine Löslichkeitsgrenze hinweg an und beginnt in Kombination mit in der Lösung vorliegenden Ionen, beispielsweise Kalzium-Ionen, gegebenenfalls auch Schwermetall-Ionen, als Sulfat-Verbindung auszufallen und sich an der Begrenzung des Wasserreservoirs, d.h. der Aufnahme, abzulagern. Es kommt somit zu einer Mischung von Schwermetall-Ionen aufweisender Fällungssubstanz und Sulfat-Ionen aufweisender Fällungssubstanz am Grund des Wasserreservoirs.

Vorteilhaft dabei ist, dass keine weiteren, über das genannte Maß hinausgehenden Substanzen zur Fällung der Schwermetall-Ionen und/oder der Sulfat-Ionen aus dem verunreinigten Wasser erforderlich ist. Denn dadurch wird die Menge an anfallendem Schlamm möglichst gering gehalten.

Das während der Filterung gewonnene Reinwasser kann beispielsweise weiter genutzt werden, etwa als Prozesswasser oder ähnlichem, oder in einen Fluss eingeleitet werden.

Man erhält somit durch das erfindungsgemäße Verfahren eine Mischung einer Schwermetall-Ionen-haltigen Fällungssubstanz und einer Sulfat-Ionen aufweisenden Fällungssubstanz. Die im Wasserreservoir abgesetzte Fällungssubstanz wird in der Regel als Schlamm bzw. Schlacke bezeichnet. Der entstehende Schlamm ist in der Regel nicht weiter verwertbar. Allerdings können diese Schlämme vorzugsweise entwässert bzw. getrocknet werden, so dass eine Endlagerung vereinfacht wird. In bestimmten
Fällen ist eine Verwertung des Sulfat-Ionen und Schwermetall-Ionen aufweisenden Schlamms möglich, bspw. in der Beton-Industrie oder als Grundstoff zur Schwefelsäureproduktion.

In einer vorteilhaften Ausgestaltung der Erfindung wird das Wasser und die dem Wasser zugeführte, in Wasser basisch wirkende Substanz, vorzugsweise aktiv, durchmischt. Die Durchmischung führt zu einer verbesserten Verteilung der in Wasser basisch wirkenden Substanz und damit zu einer erhöhten Reaktionsgeschwindigkeit der Fällungsreaktion der Schwermetall-Ionen aus der wässrigen Lösung. Die Durchmischung des Wassers und der zugeführten basisch wirkenden Substanz kann beispielsweise mittels einer Mischeinrichtung vorgenommen werden, beispielsweise kann auch die Zuführung der basisch wirkenden Substanz in das Wasser derart ausgestaltet sein, dass im Wesentlichen durch die Zuführung der basisch wirkenden Substanz in das Wasser selbst eine Durchmischung bedingt wird, bspw. durch strömungsbedingte Turbulenzen.

In einer weiteren vorteilhaften Ausgestaltung der Erfindung wird die Wasserteilmenge bei der Entnahme vorgefiltert. Aufgrund der Fällungsreaktion der Schwermetall-Ionen sind im Wasser des Wasserreservoirs langsam absinkende, in der Regel nicht agglomerierende Fällungssubstanzen vorhanden. Bei einer Wasserentnahme und einer anschließenden Filterung des entnommenen Wassers in Reinwasser und Schmutzwasser können diese störend wirken. Durch eine Vorfilterung der Wasserteilmenge bei der Entnahme dieser Wasserteilmenge aus dem Wasserreservoir kann vermieden werden, dass die im Wasser schwebenden, fein verteilte Fällungssubstanz in die Filtereinrichtung gelangt und dort gegebenenfalls eine Verschlechterung der Filterwirkung der Filtereinrichtung bewirkt. Die Vorfilterung kann bspw. mittels eines Mikrofiltrationselements oder mittels einer Flotationssäule erreicht werden.

In einer vorteilhaften Ausführungsvariante der Erfindung wird die Wasserteilmenge mittels Umkehrosmose und/oder mittels einer Nanofiltration in Reinwasser und Schmutzwasser getrennt. Sowohl die Umkehrosmose als auch die Nanofiltration sind geeignete Verfahren um Sulfat-Ionen aus Wasser zu entfernen. Während die Umkehrosmose Konzentrationsunterschiede zwischen zwei durch eine Membran getrennten Teilvolumina zur Durchführung der Filterung von Ionen ausnutzt, sieht die Nanofiltration eine Membran vor, durch welche die zu filternden Ionen aufgrund ihrer Größe nicht hindurch treten können.

In einer weiteren vorteilhaften Ausführungsvariante der Erfindung ist die in Wasser basisch wirkende Substanz eine Hydroxid-verbindung. Insbesondere können Natriumhydroxid oder auch Kalziumhydroxid zur Anwendung kommen. Diese können dem Wasserreservoir sowohl in gelöster Form als auch in fester Form zugeführt werden. Insbesondere Kalziumhydroxid oder Kalkmilch ist in großen Mengen verfügbar und kostengünstig.

In einer bevorzugten Ausgestaltung der Erfindung wird die Fällungssubstanz in einem Sammelbereich des Wasserreservoirs gesammelt. Die Fällungssubstanz, d.h. die Schwermetall-Ionen aufweisende Fällungssubstanz sowie die Sulfat-Ionen aufweisende Fällungssubstanz wird an einer geeigneten Stelle des Wasserreservoirs gesammelt. Dies kann beispielsweise durch eine Sammeleinrichtung ermöglicht werden. Auch kann beispielsweise die Bodenbegrenzung des Wasserreservoirs trichterförmig ausgestaltet werden, so dass es beim Prozess der Sedimentierung der Fällungssubstanz zu einer Ansammlung von Fällungssubstanz in einem dafür vorgesehenen Sammelbereich, bspw. in einem Trichter, kommt. Eine Sammeleinrichtung kann beispielsweise auch derart ausgestaltet sein, dass durch Vorgabe eines bestimmten Strömungsprofils innerhalb des Wasserreservoirs eine Ansammlung der Fällungssubstanz in einem bestimmten Bereich des Wasserreservoirs erfolgt.

In einer vorteilhaften Ausführungsform der Erfindung wird die Fällungssubstanz kontinuierlich aus dem Wasserreservoir abgeführt. Insbesondere bei kontinuierlicher Durchführung des erfindungsgemäßen Verfahrens kommt es auch zu einer kontinuierlichen Ausfällung von Fällungssubstanz im Wasserreservoir. Dies führt dazu, dass die Aufnahme des Wasserreservoirs mit zunehmender Zeit mit Schlamm befüllt wird. Um eine durch den Schlamm bewirkte Verdrängung von Wasser und beispielsweise ein Austreten von Wasser aus dem Wasserreservoir zu vermeiden, ist es erforderlich, dass der Schlamm aus dem Wasserreservoir entfernt wird. Eine Entfernung des Schlamms aus dem Wasserreservoir kann mit einer sich daran anschließenden Entwässerung des Schlamms in vorteilhafter Weise kombiniert werden.

Der auf die Vorrichtung bezogene Teil der Aufgabe wird gelöst durch eine Vorrichtung zur Durchführung des erfindungsgemäßen Verfahrens zur Reinigung von mit Sulfat-Ionen und Schwermetall-Ionen verunreinigtem Wasser in einem Wasserreservoir umfassend eine Aufnahme für das verunreinigte Wasser mit einem Mischbereich und einem Sammelbereich für eine Fällungssubstanz umfassend die Schwermetall-Ionen aufweisende Fällungssubstanz und die Sulfat-Ionen aufweisende Fällungssubstanz, mit einer Einrichtung zur Zuführung einer in Wasser basisch wirkenden Substanz in den Mischbereich, mit einer Einrichtung zur Entnahme von Wasser aus dem Wasserreservoir, mit einer Filtereinrichtung zur Filterung des entnommenen Wassers in von Sulfat-Ionen und Schwermetall-Ionen im Wesentlichen befreites Reinwasser und in mit Sulfat-Ionen und Schwermetall-Ionen angereichertes Schmutzwasser, und mit einer Rückführung des Schmutzwassers von der Filtereinrichtung in das Wasserreservoir.

Mit einer erfindungsgemäßen Vorrichtung kann ein mit Sulfat-Ionen und Schwermetall-Ionen verunreinigtes Wasser auf einfache Weise und kostengünstig gereinigt werden, wobei die Masse bzw. das Volumen an anfallender bzw. ausgefällter Fällungssubstanz möglichst gering gehalten wird.

In einer vorteilhaften Ausgestaltung der erfindungsgemäßen Vorrichtung erfolgt die Wasserentnahme im Wasserentnahmebereich der Aufnahme und eine Mischung in dem Mischbereich der Aufnahme, wobei eine Vermischung des Wassers aus dem Wasserentnahmebereich mit dem Wasser aus dem Mischbereich reduziert ist. Der Mischbereich, in dem die basisch wirkende Substanz dem Wasser zugeführt wird, weist in der Regel eine Wasserbewegung auf. Zudem führt die mit der Zuführung der basisch wirkenden Substanz in Verbindung entstehende Fällungsreaktion der Schwermetall-Ionen zur Erzeugung von im Wasser unlöslichen Fällungssubstanzen. Diese sind bei der Entnahme einer Wasserteilmenge mittels einer Wasserentnahmeeinrichtung zur anschließenden Filterung der Wasserteilmenge nicht erwünscht.

Denn diese im Wasser befindliche, fein verteilte Fällungssubstanz kann, wenn diese bei der Wasserentnahme mitentnommen wird, zu einer Verringerung der Filterwirkung führen, bspw. indem ein Filterelement der Filtereinrichtung mit der Fällungssubstanz zugesetzt wird. Dadurch, dass eine Mischung des Wassers aus dem Wasserentnahmebereich und des Wassers aus dem Mischbereich reduziert ist, kann das Auftreten eines derartigen Problems im Wesentlichen umgangen werden.

Die Verringerung der Vermischung von Wasser aus dem Mischbereich mit Wasser aus dem Wasserentnahmebereich kann beispielsweise durch eine bauliche Abschirmung des Wasserentnahmebereichs vom Mischbereich erreicht werden. Alternativ können beispielsweise der Wasserentnahmebereich und der Mischbereich derart relativ zueinander angeordnet, insbesondere beabstandet sein, dass ebenfalls eine Vermischung des Wassers im Wasserentnahmebereich mit dem Wasser im Mischbereich reduziert ist.

Eine derartige Maßnahme zur Reduktion der Vermischung von Wasser aus dem Mischbereich und dem Wasser aus dem Wasserentnahmebereich kann vorteilhaft kombiniert werden mit einer Mischeinrichtung zur Durchmischung der in Wasser basisch wirkenden Substanz mit Wasser. Die Mischeinrichtung fördert die Verteilung der dem Wasser zugeführten basisch wirkenden Substanz und erhöht dadurch die Reaktionsgeschwindigkeit der Fällungsreaktion. Die Mischeinrichtung kann beispielsweise als Kreislaufpumpe ausgebildet sein. Gleichzeitig wird die Wasserentnahme nicht oder nur in geringem Maße gestört.

In einer vorteilhaften Ausgestaltung der erfindungsgemäßen Vorrichtung weist die Wasserentnahmeeinrichtung wenigstens ein Mikrofiltrationselement und/oder eine wenigstens eine Flotationssäule auf. Das eine Mikrofiltrationselement bzw. die mehreren Mikrofiltrationselemente filtern das Wasser bei der Entnahme einer Wasserteilmenge im Bereich weniger Mikrometer und größer, indem beispielsweise im Wasser vorliegende ausgefällte Fällungssubstanz durch Poren entsprechender Größe zurückgehalten wird. Bei einer Flotationszelle wird die im Wasser vorliegende Fällungssubstanz mittels kleiner Gasblasen ausflotiert, wodurch ebenfalls eine Vorfilterung des entnommenen Wassers erzielt wird. Eine Flotationszelle ist in der Regel Teil der Wasserentnahmeeinrichtung, in welcher das entnommene Wasser vorgefiltert wird, und der Filtereinrichtung vorgeordnet.

Vorzugsweise umfasst die Wasserentnahmeeinrichtung eine Mehrzahl an Mikrofiltrationselementen, welche als Redundanzen vorgesehen sind, und dann zum Einsatz kommen können, wenn eine Verstopfung eines Mikrofiltrationselementes, mit welchem Wasser entnommen wurde, auftritt.

In einer bevorzugten Ausgestaltung der erfindungsgemäßen Vorrichtung umfasst die Filtereinrichtung wenigstens eine Nanofiltrationsstufe und/oder wenigstens einen Umkehrosmosefilter. Es handelt sich hierbei um Filterelemente mit bekannter Verhaltensweise im Betrieb, welche geeignet sind eine Filterung von mit Sulfat-Ionen und/oder Schwermetall-Ionen verunreinigtem Wasser in Reinwasser und Schmutzwasser durchzuführen.

In einer vorteilhaften Ausführungsvariante der erfindungsgemäßen Vorrichtung ist eine Reinigungseinrichtung für eine Membran der Filtereinrichtung und/oder Wasserentnahmeeinrichtung vorgesehen, wobei eine Reinigung der Membran mittels eines magnetischen Feldes bewirkbar ist. Dazu wird eine Einrichtung zur Erzeugung eines Magnetfeldes vorgesehen, wobei das Magnetfeld bspw. eine Membran einer Filtereinrichtung oder einer Wasserentnahmeeinrichtung derart durchdringt, dass die durch die Membran gefilterten bzw. zu filterenden, sich nahe der Membran befindenden Sulfat-Ionen eine von der Membran wegführende Kraft erfahren, und der Betrag der Kraft derart groß ist, dass die gefilterten Ionen von der Membran wegbewegt werden.

Erfindungsgemäß weist die Aufnahme einen Sammelbereich zur Sammlung von Sulfat-Ionen und/oder Schwermetall-Ionen aufweisender Fällungssubstanz auf. Dies erleichtert beispielsweise eine nachfolgende Ausräumung der im Sammelbereich gesammelten Fällungssubstanz. Denn die Fällungssubstanz ist dadurch lokal konzentriert und nicht weit innerhalb des Wasserreservoirs verteilt.

Ein Sammelbereich kann bspw. durch eine geeignete bauliche Maßnahme, z.B. ein Trichter-förmiger Boden der Aufnahme, oder durch Beeinflussung eines Strömungsprofils in dem Wasserreservoir ermöglicht werden. Auch die Einstellung eines bestimmten Strömungsprofils kann dazu genutzt werden, eine Ansammlung von Fällungssubstanz in einem bestimmten Bereich der Aufnahme zu erzeugen.

Zur Ausräumung bzw. zur Abführung der in dem Sammelbereich gesammelten Fällungssubstanz kann eine Abführeinrichtung vorgesehen werden. Die Abführeinrichtung zur Abführung der gesammelten Fällungssubstanz kann beispielsweise als Bagger, Sauger oder Pumpe ausgebildet sein. Die Abführeinrichtung wird vorzugsweise derart betrieben, dass die Abführung der Fällungssubstanz kontinuierlich erfolgt. Alternativ kann die Abführung der ausgefällten Fällungssubstanz in bestimmten Zeitintervallen erfolgen.

Vorteilhafterweise umfasst die erfindungsgemäße Vorrichtung eine Entwässerungseinrichtung, mittels welcher die abgeführte Fällungssubstanz entwässerbar ist. Insbesondere kann die Entwässerungseinrichtung als Filterpresse, Bandfilter oder Heizeinrichtung ausgebildet sein. Eine Entwässerung der ausgeführten bzw. abgeführten Fällungssubstanz reduziert das Volumen der Fällungssubstanz, indem Wasser aus der mit Wasser durchsetzten und aus dem Wasserreservoir abgeführten Fällungssubstanz ausgetrieben wird. Zudem wird durch eine Entwässerung eine Endlagerung der Schwermetall-Ionen aufweisenden bzw. Sulfat-Ionen aufweisenden Fällungssubstanz erleichtert.

In einer bevorzugten Ausgestaltung der erfindungsgemäßen Vorrichtungen ist die Aufnahme, in welcher das verunreinigte Wasser bereitgestellt ist, ein Auffangbecken. Das Auffangbecken kann einerseits eine natürliche Senke sein, in der sich Wasser ansammelt. Andererseits kann es sich um ein künstlich geschaffenes Auffangbecken handeln, welches zum Zweck der Sammlung von Wasser, insbesondere Abwasser, geschaffen wurde. Im Falle einer natürlichen Senke spricht man in der Regel von einem sogenannten "Tailing Dam".

In einer alternativen Ausgestaltung der erfindungsgemäßen Vorrichtung ist die Aufnahme ein Reinigungsbehälter. D.h. die Reinigung des mit Sulfat-Ionen und Schwermetall-Ionen verunreinigten Wassers findet in einem sogenannten Kristallisationsreaktor statt, in welchem die Fällungssubstanz ausgefällt wird. Hier wird also das Wasserreservoir beispielsweise in einem Reinigungsbehälter des Kristallisationsreaktors zur Durchführung des Verfahrens bereitgestellt.

Weitere Vorteile der Erfindung ergeben sich aus den schematisch dargestellten Ausführungsbeispielen, welche anhand der nachfolgenden Zeichnungen näher erläutert werden. Es zeigen:
- FIG 1: eine natürliche Senke mit einer erfindungsgemäßen Vorrichtung zur Durchführung des erfindungsgemäßen Verfahrens,
- FIG 2: eine als Kristallisationsreaktor ausgebildete erfindungsgemäße Vorrichtung zur Durchführung des erfindungsgemäßen Verfahrens,
- FIG 3: ein Flussdiagramm zur Darstellung eines möglichen Ablaufs des erfindungsgemäßen Verfahrens.

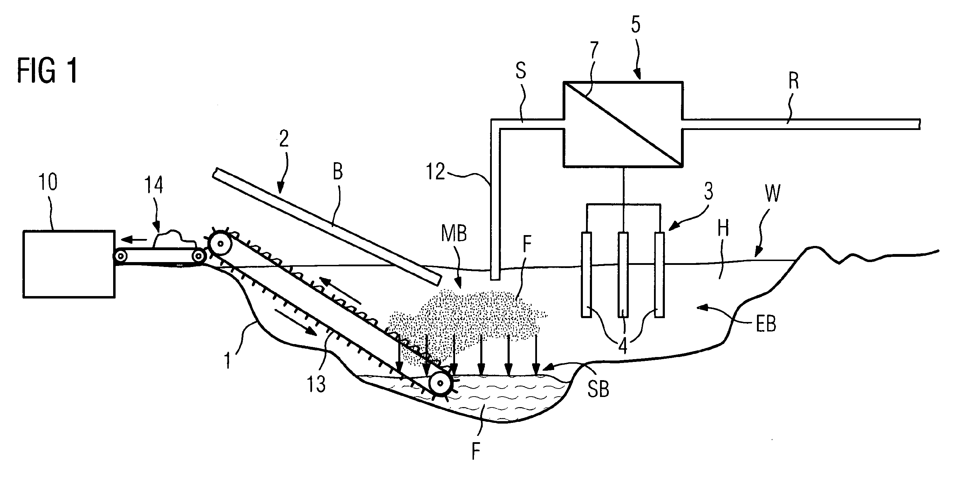

FIG 1 zeigt ein Wasserreservoir W. Das Wasserreservoir W weist mit Schwermetall-Ionen und Sulfat-Ionen verunreinigtes Wasser H auf, welches in einer vom Wasserreservoir W umfassten Aufnahme 1 bereitgestellt ist. In FIG 1 ist die Aufnahme 1 als natürliche Senke ausgebildet. Das Wasserreservoir W ist im vorliegenden Fall ein Tailing Dam, welcher einer Mine, bspw. zum Abbau von metallischen Rohstoffen, zuordenbar ist.

Um eine Reinigung des mit Schwermetall-Ionen und Sulfat-Ionen verunreinigten Wassers H von den Schwermetall-Ionen und den Sulfat-Ionen zu ermöglichen, ist eine Zuführungseinrichtung 2 vorgesehen, mit welcher eine in Wasser basisch wirkende Substanz B - in FIG 1 Kalkwasser, Ca(OH)_{2(aq)}- dem verunreinigten Wasser H in der Senke 1 zuführbar ist.

Die Einleitung des Kalkwassers B in das mit Schwermetall-Ionen und Sulfat-Ionen verunreinigte Wasser H führt zu einer Erhöhung des pH-Wertes, indem dem Wasser Hydroxid-Ionen zugeführt werden. Durch die Zuführung von Hydroxid-Ionen kommt es zu einer Verschiebung des chemischen Gleichgewichts für die im Wasser gelösten Schwermetall-Ionen und ihren möglichen Salzen. Durch die Verschiebung des chemischen Gleichgewichts durch Zuführung der in Wasser basisch wirkenden Substanz B kann eine Fällungsreaktion der Schwermetall-Ionen bewirkt werden. Die im verunreinigten Wasser H gelösten Schwermetall-Ionen werden als Fällungssubstanz, welche häufig auch als Präzipitat bezeichnet wird, aus dem verunreinigten Wasser ausgefällt. Die Fällungssubstanz F ist bei der vorliegenden Erfindung häufig eine Schwermetallhydroxid-Verbindung.

Derjenige Bereich des Wasserreservoirs W, an welchem eine Durchmischung des dem verunreinigten Wasser H zugeführten Kalkwassers B mit dem verunreinigten Wasser H erfolgt, wird als Mischbereich MB bezeichnet. Insbesondere im Mischbereich MB kommt es zur Ausfällung der Schwermetall-Ionen aufweisenden Fällungssubstanz. Die im Mischbereich MB ausgefällte Fällungssubstanz F sinkt dann in der Regel, bei nicht dem Absinken der Fällungssubstanz F entgegen gerichteten Wasserströmen, auf den Grund der Senke 1 und sammelt sich dort in einem Sammelbereich SB an. Unter dem Begriff Sammelbereich SB können alle Möglichkeiten verstanden werden, an oder auf welchen sich ausgefällte Fällungssubtanz F absetzt bzw. sedimentiert.

Zur Entfernung der Sulfat-Ionen aus dem mit Schwermetall- und Sulfat-Ionen verunreinigtem Wasser H ist eine Wasserentnahmeeinrichtung 3 vorgesehen, welche Mikrofiltrationselemente 4 umfasst. Die Wasserentnahmeeinrichtung 3 ist einem Wasserentnahmebereich EB angeordnet. Die Mikrofiltrationselemente 4 dienen der Vorfilterung des aus dem Wasserreservoir W entnommenen Wassers H. Insbesondere wird das entnommene Wasser H von im Wasser H schwebender Fällungssubstanz F gereinigt. Alternativ oder zusätzlich kann eine der Wasserentnahme nachgeordnete, nicht dargestellte Flotationszelle zur Vorfilterung des entnommenen Wassers H vorgesehen werden.

Das mit der Wasserentnahmeeinrichtung 3 entnommene Wasser H wird einer Filtereinrichtung 5 zugeführt. In FIG 1 umfasst die Filtereinrichtung 5 einen Umkehrosmosefilter 7. Mittels des Umkehrosmosefilters 7 wird das aus dem Wasserreservoir W entnommene Wasser H in Reinwasser R und Schmutzwasser S getrennt. Das Feinwasser R ist im Wesentlichen von Sulfat-Ionen und Schwermetall-Ionen befreit. Das Schmutzwasser S hingegen ist mit Schwermetall-Ionen und Sulfat-Ionen angereichert.

Mittels einer Fuckführeinrichtung 12 wird das Schmutzwasser S von der Filtereinrichtung 5 in das Wasserreservoir W zurückgeleitet. Alternativ kann auf eine Rückführeinrichtung 12 verzichtet werten, bspw. indem die Filtereinrichtung 5 oberhalb des Wasser reservoirs W angeordnet ist und das Schmutzwasser von des Filtereinrichtung 5 in das Wasserreservoir W bspw. zurückgefuhrt wird, ohne dass eine physikalisch vorhandene Führungseinrichtung für das Schmutzwasser S vorgesehen ist.

Vorzugsweise wird das Schmutzwasser S in den Mischbereich MB eingeleitet, in welchen auch das Kalkwasser B zur Fällung der Schwermetall-Ionen eingeleitet wird.

Durch die im Schmutzwasser S enthaltenen Sulfat-Ionen kommt es durch die Rückführung des Schmutzwasser S in das Wasserreservoir W zu einer Erhöhung der Konzentration von Sulfat-Ionen im Wasserreservoir W. Die Konzentration der Sulfat-Ionen wird durch das in das Wasserreservoir W rückgeführte Schmutzwasser S solange erhöht, bis eine Fällung einer Sulfat-Ionen-haltigen Fällungssubstanz auftritt. Auch die Sulfat-Ionen-haltige Fällungssubstanz sinkt in der Regel auf den Grund des Tailing Dams 1. Es kommt also auf den Grund des Tailing Dams zu einer Vermengung von Sulfat-Ionen- und Schwermetall-Ionen-haltiger Fällungssubstanz unter Bildung der Fällungssubstanz F.

Um eine zunehmende Befüllung des Wasserreservoirs W bzw. der Senke 1 mit ausgefällter und angesammelter Fällungssubstanz F zu verhindern, ist eine Abführeinrichtung 13 vorgesehen, welche in FIG 1 als Bagger ausgebildet ist. Der Bagger 13 ist vorzugsweise derart ausgestaltet, dass eine kontinuierliche Abführung von ausgefällter Fällungssubstanz F möglich ist. Alternativ kann es sich dabei bspw. auch um einen nicht kontinuierlich abgrabenden Schaufelbagger 13 handeln, welcher bspw. nach Trockenlegung des Wasserreservoirs W die in der Senke 1 abgelagerte Fällungssubstanz F abträgt.

Anschließend wird die mittels des Baggers 13 abgeführte Fällungssubstanz F auf ein Transportband 14 befördert, welche die mit verunreinigtem Wasser durchsetzte Fällungssubstanz F in eine Entwässerungseinrichtung 10 transportiert.

In der Entwässerungseinrichtung 10, welche in FIG 1 als Filterpresse ausgebildet ist, findet eine Entwässerung der aus dem Wasserreservoir W bzw. dem Tailing Dam abgeführten Fällungssubstanz F statt. Nach der Entwässerung der Fällungssubstanz F wird in der Regel eine Endlagerung des entwässerten Schlamms vorgesehen. Das bei der Entwässerung der mit Wasser durchsetzten Fällungssubstanz F gegebenenfalls anfallende, verunreinigte Wasser kann dem Wasserreservoir W erneut zur Reinigung zugeführt werden.

Die in FIG 1 gezeigte Vorrichtung ist insbesondere geeignet für die Reinigung von großen Wasservolumina. Die in FIG 1 gezeigte Reinigungsvorrichtung wird vorzugsweise kontinuierlich betrieben. Denn durch natürliche Zuflüsse - Regen, Schmelzwasser oder ähnliches - wird dem Tailing Dam bzw. dem Wasserreservoir W ständig verunreinigtes Wasser H neu zugeführt. Daher ist es zweckmäßig, einen kontinuierlichen Betrieb der in FIG 1 gezeigten Vorrichtung vorzusehen.

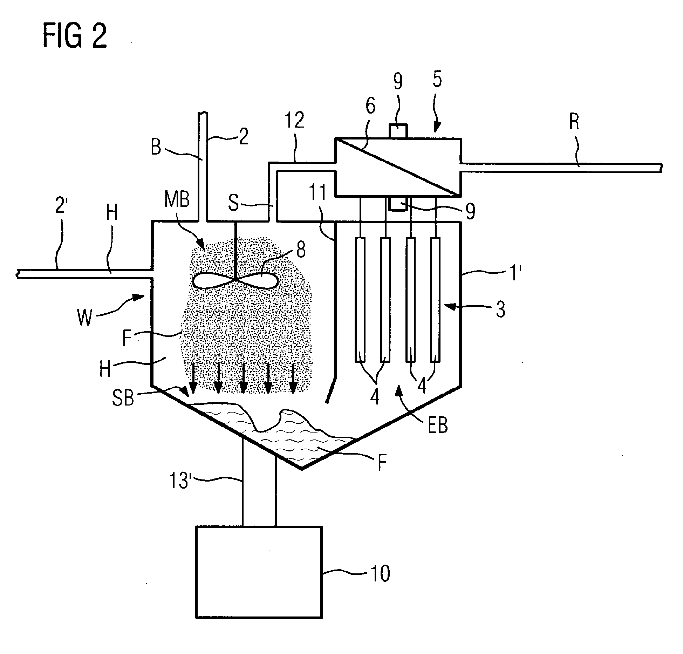

FIG 2 zeigt einen Rekristallisationsreaktor zur Reinigung von mit Schwermetall-Ionen und Sulfat-Ionen verunreinigtem Wasser H. Dazu wird einer als Reinigungsbehälter ausgebildete Aufnahme 1' des Rekristallisationsreaktors verunreinigtes Wasser H über eine Wasserzuführeinrichtung 2' zugeführt und kann bspw. einem Tailing Dam entnommen werden. Der Reinigungsbehälter 1' bildet zusammen mit dem darin enthaltenen verunreinigten Wasser H ein Wasserreservoir W.

Ferner ist eine Zuführeinrichtung 2 für die Zuführung einer in Wasser basisch wirkenden Substanz B - in FIG 2 Kalkwasser - in das sich im Reinigungsbehälter 1' befindende, verunreinigte Wasser H vorgesehen. Der Bereich, in welchem sich das Kalkwasser B mit dem verunreinigten im Rekristallisationsreaktor befindlichen Wasser H vermischt, wird als Mischbereich MB bezeichnet.

Um eine Durchmischung von verunreinigtem Wasser H mit dem Kalkwasser B zu verbessern, ist in FIG 2 eine als Kreislaufpumpe ausgebildete Mischeinrichtung 8 vorgesehen. Die Kreislaufpumpe 8 durchmischt das Kalkwasser B mit dem verunreinigten Wasser H durch Erzeugung einer turbulenten Strömung wenigstens in einem Teilbereich des Wasserreservoirs W, insbesondere im Mischbereich MB.

Die Zuführung des Kalkwassers B in das im Reinigungsbehälter 1' befindliche, verunreinigte Wasser H bewirkt eine Erhöhung des pH-Wertes des verunreinigten Wassers H. Durch die Erhöhung des pH-Wertes und der damit verbundenen Verschiebung des chemischen Gleichgewichts für die im verunreinigten Wasser gelöst vorliegenden Schwermetall-Ionen und den daraus möglichen Salzen mit den im verunreinigten Wasser vorliegenden Edukten, fällt eine Fällungssubstanz aus. Die Fällungssubstanz ist in der Regel eine Schwermetallhydroxid-Verbindung und Gips, CaSO₄. Die Fällungssubstanz sinkt als Bestandteil der Fällungssubstanz F in FIG 2 auf den Grund des Reinigungsbehälters 1'.

Zur Verbesserung der Sammlung der Fällungssubstanz F ist der Grund des Reinigungsbehälters 1' in FIG 2 trichterförmig ausgebildet. Dieser wird in FIG 2 als Sammelbereich SB bezeichnet, da sich die Fällungssubstanz F bevorzugt im Trichter des Reinigungsbehälters 1' ansammelt.

Der Reinigungsbehälter 1' weist neben dem Mischbereich MB und dem Sammelbereich SB einen Wasserentnahmebereich EB auf. Der Wasserentnahmebereich EB ist durch eine Trenneinrichtung 11 vom Mischbereich MB getrennt. Im Wasserentnahmebereich EB ist eine Wasserentnahmeeinrichtung 3 angeordnet. Die Wasserentnahmeeinrichtung 3 umfasst eine Mehrzahl von Mikrofiltrationselementen 4, welche bei der Wasserentnahme eine Vorfilterung des verunreinigten Wassers H durchführen. Insbesondere werden Schwebeteilchen, bspw. im verunreinigten Wasser H schwebende Fällungssubtanz F, bei der Wasserentnahme selektiert

Durch die Trenneinrichtung 11 wird die Lebensdauer der Mikrofiltrationselemente 4 erhöht, da im Vergleich zu einer fehlenden Trenneinrichtung 11 die Konzentration an schwebender Fällungssubstanz F im Entnahmebereich EB reduziert ist. Eine Verstopfungsrate für die Mikrofiltrationselemente 4 ist somit geringer. Damit sinken Instandhaltungszeiten und Instandhaltungskosten der Wasserentnahmeeinrichtung 3.

Von der Wasserentnahmeeinrichtung 3 wird das verunreinigte, entnommene Wasser H einer Filtereinrichtung 5 zugeführt. Mittels einer von der Filtereinrichtung 5 umfassten Nanofiltrationsstufe 6 wird das verunreinigte und entnommene Wasser H in Reinwasser R und in Schmutzwasser S getrennt. Das Reinwasser R ist im Wesentlichen von Sulfat-Ionen und Schwermetall-Ionen befreit. Das Schmutzwasser R ist dagegen mit Sulfat-Ionen und Schwermetall-Ionen angereichert. Die Anreicherung bzw. Abreicherung von Ionen kann als Verhältnis der Konzentration der jeweiligen Ionen im Reinwasser bzw. Schmutzwasser und der jeweiligen Ionen im der Filtereinrichtung 5 zugeführten Wasser bestimmt werden.

Mittels einer Rückführeinrichtung 12 wird das Schmutzwasser S aus der Filtereinrichtung 5 zurück in das Wasserreservoir W geführt. Durch das Rückführen des Schmutzwassers S in das Wasserreservoir W kommt es vorwiegend zu einem Anstieg der Sulfat-Ionen-Konzentration im Wasserreservoir W, insbesondere bei einer Vorrichtung gemäß FIG 2 zu einem Anstieg der Sulfat-Ionen-Konzentration im Mischbereich MB. Die lokale Konzentrationserhöhung der auszufällenden Ionen ist dahingehend vorteilhaft, da sich die Sulfat-Ionen aufweisende Fällungssubstanz und die Schwermetall-Ionen aufweisende Fällungssubtanz im Wesentlichen in demselben Sammelbereich SB ansammelt.

Das Schmutzwasser S kann alternativ jedoch bspw. auch im Wasserentnahmebereich EB zugeführt werden. Der Zustrom des Schmutzwassers S im Wasserentnahmebereich EB des Wasserreservoirs W kann dabei derart ausgestaltet sein, dass Schwebeteilchen im verunreinigten Wasser H von den Mikrofiltrationselementen 4 verstärkt fern gehalten werden. Dies geschieht bspw. durch Anpassung der Strömungsverhältnisse.

Durch die stetige Zuführung von mit Sulfat-Ionen angereichertem Schmutzwasser S in den Mischbereich MB, kommt es zur Überschreitung der Löslichkeitsgrenze von im Wasser vorhandenen Sulfat-Ionen und den mit den im verunreinigten Wasser vorliegenden Edukten möglichen Salzen.

In der Regel wird die Sulfat-Ionen aufweisende Fällungssubstanz Kalziumsulfat, Kaliumsulfat ggf. auch Schwermetallsulfat umfassen und sich durch Absinken im trichterförmigen Sammelbereich SB des Reinigungsbehälters 1' sammeln.

Um ein Auffüllen des Reinigungsbehälters 1' mit ausgefällter Fällungssubstanz F zu verhindern, ist eine Abführeinrichtung 13' vorgesehen, welche in FIG 2 als Sauger ausgebildet ist. Der Sauger 13' saugt periodisch oder kontinuierlich die im Sammelbereich SB des Reinigungsbehälters 1' angesammelte Fällungssubstanz F ab. Die abgesaugte Fällungssubstanz F wird dann einer Entwässerungseinrichtung 10 zugeführt, welche die mit Wasser durchsetzte Fällungssubstanz F entwässert. Das dabei ggf. anfallende, verunreinigte Wasser kann dem Reinigungsbehälter 1' erneut zugeführt werden.

Das mit den in FIG 1 und FIG 2 gezeigten Reinigungsvorrichtungen erzeugbare Reinwasser R weist einen Reinheitsgrad auf, welcher es erlaubt, das Reinwasser bspw. ohne Verletzung von Umweltauflagen in ein Gewässer einzuleiten. Alternativ kann eine beliebige andere Nutzung des Reinwassers vorgesehen werden.

Gegebenenfalls kann der Reinigungsbehälter 1' auch sehr kleinvolumig ausgebildet sein, beispielsweise als Mikroreaktionsreaktor, so dass ein erfindungsgemäßes Verfahren auch in der Verfahrenstechnik, insbesondere der Mikroverfahrenstechnik, angewendet werden kann.

Die Filtereinrichtung 5, welche eine Nanofiltrationsstufe 6 nutzt um das aus dem Reinigungsbehälter 1' entnommene verunreinigte Wasser H in Schmutzwasser S und Reinwasser R zu separieren, weist eine Reinigungseinrichtung 9 auf. Diese Reinigungseinrichtung 9 ist derart ausgebildet, dass eine Durchlässigkeit für Reinwasser R einer von der Nanofiltrationsstufe 6 genutzten Membran im Wesentlichen einstellbar ist. Insbesondere kann mittels der Reinigungseinrichtung 9 eine Reinigung der Membran erfolgen.

Dies wird dadurch erreicht, dass die Reinigungseinrichtung 9 Mittel zur Erzeugung eines Magnetfelds umfasst. Das mit den dazu vorgesehenen Mitteln erzeugte Magnetfeld durchdringt die Nanofiltrationsstufe 6, insbesondere die Membran, und entfernt die durch die Membran zu filternden, nahe der Membran angeordneten bzw. die bereits von der Membran gefilterten Ionen aus der Nähe der Membran bzw. von der Membran.

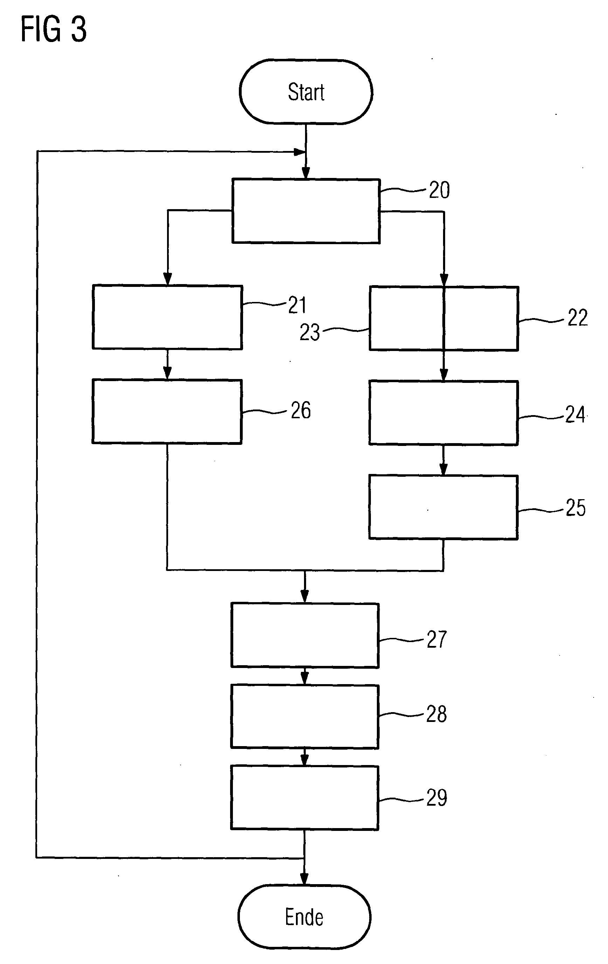

FIG 3 zeigt einen Ablaufplan eines Verfahrens, welches geeignet ist mit Schwermetall-Ionen und Sulfat-Ionen verunreinigtes Wasser zu reinigen. In einem ersten Verfahrensschritt 20 wird mit Sulfat-Ionen und Schwermetall-Ionen verunreinigtes Wasser bereitgestellt, welches mittels des erfindungsgemäßen Verfahrens gereinigt werden soll.

Zur Fällung bzw. Entfernung der Schwermetall-Ionen aus dem verunreinigten Wasser, wird dem verunreinigten Wasser zunächst Kalkwasser, Kalkmilch, Kalilauge, Natronlauge oder eine andere in Wasser basisch wirkende Substanz in einem Verfahrensschritt 21 zugeführt. Die dem Wasser zugeführte basisch wirkende Substanz wird vorzugsweise mittels Mitteln zum Mischen bzw. einer Mischeinrichtung des Wassers mit dem Wasser in einem Verfahrensschritt 26 durchmischt.

Durch die Durchmischung wird die Reaktionsgeschwindigkeit der in Wasser basisch wirkenden Substanz mit den Schwermetall-Ionen erhöht und es kommt zu einer verbesserten Fällung der Schwermetall-Ionen aus dem verunreinigten Wasser. Die Mischung der in Wasser basisch wirkenden Substanz mit dem verunreinigten Wasser kann beispielsweise erfolgen durch Rühren oder Schütteln oder durch ein geeignetes Einleiten der in Wasser basisch wirkenden Substanz und des verunreinigte Wasser in gemeinsame Mischstrecken.

Vorzugsweise parallel zu der Zuführung der in Wasser basisch wirkenden Substanz in das verunreinigte Wasser, wird mittels einer Wasserentnahmeeinrichtung in einem Verfahrensschritt 22 verunreinigtes Wasser entnommen. Die Entnahme des Wassers ist vorzugsweise gekoppelt mit einer Vorfilterung des entnommenen, verunreinigten Wassers in einem Verfahrensschritt 23. Der Verfahrensschritt 22 der Wasserentnahme und der Verfahrensschritt 23 der Vorfilterung finden vorzugsweise im Wesentlichen gemeinsam statt.

Das im Verfahrensschritt 23 entnommene Wasser wird dann einer Filtereinrichtung zugeführt, in welcher das verunreinigte Wasser in einem Verfahrensschritt 24 in Reinwasser und Schmutzwasser getrennt wird. Zur Trennung des verunreinigten Wassers in Reinwasser und Schmutzwasser können bekannte Filterkonzepte verwendet werden. Als Beispiel kann die Umkehrosmose oder die Nanofiltration genannt werden. Jedoch können auch andere Filterkonzepte verwendet werden.

Das mit Sulfat-Ionen und ggf. mit Schwermetall-Ionen angereicherte Schmutzwasser wird dem Wasserreservoir in einem Verfahrensschritt 25 wieder zugeführt. Dadurch kommt es zu einer Erhöhung der Konzentration von Sulfat-Ionen im Wasserreservoir. Die Sulfat-Ionen-Konzentration erhöht sich, bis eine in Wasser gerade noch lösliche Grenzkonzentration überschritten wird und bei deren Überschreitung eine Fällungsreaktion einsetzt.

Alternativ kann die Zuführung der in Wasser basisch wirkenden Substanz in das verunreinigte Wasser und die dadurch ausgelöste Fällungsreaktion vor der Wasserentnahme im Verfahrensschritt 22 stattfinden. Dabei wird die in Wasser basisch wirkende Substanz in einem Maß zugeführt, das es erlaubt, das Wasserreservoir zunächst im Wesentlichen vollständig von den Schwermetall-Ionen zu befreien.

Indem die Schwermetall-Ionen mittels der in Wasser basisch wirkenden Substanz ausgefällt werden, bevor eine Wasserentnahme im Verfahrensschritt 22 und eine anschließende Filterung im Verfahrensschritt 24 des nun im Wesentlichen keine Schwermetall-Ionen mehr aufweisenden Wassers erfolgt, kann ggf. der Reinheitsgrad des Reinwassers, d.h. die Konzentration von Schwermetall-Ionen im Reinwasser nochmals reduziert werden. In der Regel ist ein solcher serieller Ablauf der oben genannten Verfahrensschritte dann zweckmäßig, wenn einem Wasserreservoir mit zu reinigendem Wasser nicht ständig bzw. kontinuierlich neues, verunreinigtes Wasser zugeführt wird.

Die in der Regel durch verschiedene Fällungsreaktionen erzeugte Fällungssubstanz F sammelt sich im Allgemeinen am Grund einer Aufnahme. Jedoch kann auch eine aktive Sammlung von Fällungssubstanz F in einem Verfahrensschritt 27 vorgesehen werden. Die aktive Sammlung kann beispielsweise durch die Form der Aufnahme erfolgen oder etwa durch die Erzeugung eines zur Sammlung von Fällungssubstanz F an einer bestimmten Stelle geeigneten Strömungsprofils. Gegebenenfalls kann eine Sammeleinrichtung vorgesehen werden, welche die ausgefällte Fällungssubstanz F aktiv kumuliert, bspw. eine Kehreinrichtung oder Schiebeeinrichtung.

In einem Verfahrensschritt 28 wird dann die gesammelte Fällungssubstanz F aus der Aufnahme abgeführt und anschließend in einem Verfahrensschritt 29 entwässert. Anschließend kann die entwässerte Fällungssubstanz F endgelagert werden, beispielsweise in einem stillgelegten Bergwerk.

Vorzugsweise wird das Verfahren mit den angegebenen Verfahrensschritten, insbesondere im Hinblick auf eine Reinigung von Minenabwasser, kontinuierlich ausgeführt. D.h. die Zuleitung einer in Wasser basisch wirkenden Substanz in das verunreinigte Wasser, die Abführung von ausgefällter Fällungssubstanz F aus einem Sammelbereich und die Wasserentnahme sowie die daran angeschlossene Filterung finden parallel statt. Dadurch kann in der Regel ein größtmöglicher Durchsatz an verunreinigtem Wasser gereinigt werden.

## Patentansprüche

1. Verfahren zur Reinigung von mit Sulfat-Ionen und Schwermetall-Ionen verunreinigtem Wasser (H),
wobei das Wasser (H) in einem Wasserreservoir (W) gesammelt (20) wird und dem Wasser (H) im Wasserreservoir (W) eine in Wasser basisch wirkende Substanz (B) in einer einen pH-Wert des Wassers (H) erhöhenden Menge zugeführt (21) wird, sodass eine Schwermetall-Ionen aufweisende Fällungssubstanz aus dem Wasser (H) ausgefällt wird,
- wobei wenigstens eine Wasserteilmenge aus dem Wasserreservoir (W) entnommen (22) und mittels einer Filtereinrichtung (5) in von Sulfat-Ionen und Schwermetall-Ionen im Wesentlichen befreites Reinwasser (R) und in mit Sulfat-Ionen und Schwermetall-Ionen angereichertes Schmutzwasser (S) getrennt (24) wird, und
- wobei das Schmutzwasser (S) wenigstens teilweise in das Wasserreservoir (W) zurückgeführt (25) wird, wodurch sich eine Konzentration von Sulfat-Ionen in dem Wasserreservoirerhöht und nach Erreichen der Löslichkeitsgrenze eine Sulfat-Ionen aufweisende Fällungssubstanz aus dem Wasser (H) ausgefällt wird.

2. Verfahren nach Anspruch 1,
**dadurch gekennzeichnet, dass** das Wasser (H) und die zugeführte basisch wirkende Substanz (B) durchmischt (26) werden.

3. Verfahren nach Anspruch 1 oder 2,
**dadurch gekennzeichnet, dass** die Wasserteilmenge bei der Entnahme vorgefiltert (23) wird.

4. Verfahren nach einem der Ansprüche 1 bis 3,
**dadurch gekennzeichnet, dass** die Wasserteilmenge durch eine Filtereinrichtung (5) in Reinwasser (R) und Schmutzwasser (S) getrennt (24) wird, welche auf einer Umkehrosmose und/oder einer Nanofiltration basiert.

5. Verfahren nach einem der Ansprüche 1 bis 4,
**dadurch gekennzeichnet, dass** die in Wasser basisch wirkende Substanz (B) eine Hydroxid-Verbindung ist.

6. Verfahren nach einem der Ansprüche 1 bis 5,
**dadurch gekennzeichnet, dass** Fällungssubstanz (F) umfassend die Schwermetall-Ionen aufweisende Fällungssubstanz und die Sulfat-Ionen aufweisende Fällungssubstanz in einem Sammelbereich (SB) des Wasserreservoirs (W) gesammelt (27) wird.

7. Verfahren einem der Ansprüche 1 bis 6,
**dadurch gekennzeichnet, dass** Fällungssubstanz (F) umfassend die Schwermetall-Ionen aufweisende Fällungssubstanz und die Sulfat-Ionen aufweisende Fällungssubstanz kontinuierlich aus dem Wasserreservoir (W) abgeführt (28) wird.

8. Verfahren nach Anspruch 7,
**dadurch gekennzeichnet, dass** abgeführte Fällungssubstanz (F) umfassend die Schwermetall-Ionen aufweisende Fällungssubstanz und die Sulfat-Ionen aufweisende Fällungssubstanz entwässert (29) wird.

9. Vorrichtung zur Durchführung eines Verfahrens nach einem der Ansprüche 1 bis 8 zur Reinigung von mit Sulfat-Ionen und Schwermetall-Ionen verunreinigtem Wasser (H) in einem Wasserreservoir (W) umfassend eine Aufnahme (1, 1') für das Wasser (H) mit einem Mischbereich (MB) und einem Sammelbereich (SB) für eine Fällungssubstanz (F) umfassend die Schwermetall-Ionen aufweisende Fällungssubstanz und die Sulfat-Ionen aufweisende Fällungssubstanz, mit einer Einrichtung (2) zur Zuführung einer in Wasser basisch wirkenden Substanz (B) in den Mischbereich (MB), mit einer Einrichtung (3, 4) zur Entnahme von Wasser (H) aus dem Wasserreservoir (W), mit einer Filtereinrichtung (5) zur Filterung des entnommenen Wassers (H) in von Sulfat-Ionen und Schwermetall-Ionen im Wesentlichen befreites Reinwasser (R) und in mit Sulfat-Ionen und Schwermetall-Ionen angereichertes Schmutzwasser (S), und mit einer Rückführung des Schmutzwassers (S) von der Filtereinrichtung (5) in das Wasserreservoir (W).

10. Vorrichtung nach Anspruch 9,
**dadurch gekennzeichnet, dass** die Wasserentnahme in einem Entnahmebereich (EB) des Wasserreservoirs (W) und eine Mischung der in Wasser (H) basisch wirkenden Substanz (B) mit Wasser (H) in dem Mischbereich (MB) des Wasserreservoirs (W) erfolgt, wobei eine Vermischung von Wasser (H) aus dem Entnahmebereich (EB) mit Wasser (H) aus dem Mischbereich (MB) reduziert ist.

11. Vorrichtung nach Anspruch 9 oder 10,
**dadurch gekennzeichnet, dass** eine Einrichtung (8) zum Mischen von der in Wasser basisch wirkenden Substanz (B) mit dem Wasser (H) vorgesehen ist.

12. Vorrichtung nach einem der Ansprüche 9 bis 11,
**dadurch gekennzeichnet, dass** die Wasserentnahmeeinrichtung (3) wenigstens ein Mikrofiltrationselement (4) und/oder wenigstens eine Flotationszelle aufweist.

13. Vorrichtung nach einem der Ansprüche 9 bis 12,
**dadurch gekennzeichnet, dass** die Filtereinrichtung (5) wenigstens eine Nanofiltrationsstufe (6) und/oder wenigstens einen Umkehrosmose-Filter (7) umfasst.

14. Vorrichtung nach einem der Ansprüche 9 bis 13,
**dadurch gekennzeichnet, dass** die Filtereinrichtung (5) und/oder die Wasserentnahmeeinrichtung (3) eine für Reinwasser (R) durchlässige Membran aufweist, wobei eine Reinigungseinrichtung (9) für die Membran vorgesehen ist, wobei eine Reinigung der Membran mittels eines magnetischen Feldes bewirkbar ist.

15. Vorrichtung nach einem der Ansprüche 9 bis 14,
**dadurch gekennzeichnet, dass** die Rückführung derart ausgebildet ist, dass das Schmutzwasser (S) in den Mischbereich (MB) rückgeführt wird.

16. Vorrichtung nach einem der Ansprüche 9 bis 15,
**dadurch gekennzeichnet, dass** die in dem Sammelbereich (SB) gesammelte Fällungssubstanz (F) mittels einer Abführeinrichtung (13) abführbar ist.

17. Vorrichtung nach Anspruch 16,
**dadurch gekennzeichnet, dass** die abgeführte Fällungssubstanz (F) mittels einer Entwässerungseinrichtung (10) entwässerbar ist.

18. Vorrichtung nach Anspruch 17,
**dadurch gekennzeichnet, dass** die Entwässerungseinrichtung (10) als Filterpresse und/oder als Bandfilter ausgebildet ist.

19. Vorrichtung nach einem der Ansprüche 9 bis 18,
**dadurch gekennzeichnet, dass** die Aufnahme (1, 1') ein Auffangbecken (1) ist.

20. Vorrichtung nach einem der Ansprüche 9 bis 18,
**dadurch gekennzeichnet, dass** die Aufnahme (1, 1') ein Reinigungsbehälter (1') ist.

21. Verwendung der Vorrichtung nach einem der Ansprüche 9 bis 20 zur Reinigung von beim Abbau von Rohstoffen in Minen mit schwefelhaltigem Bodenreich anfallenden Abwässern.

## Claims

1. Method for the purification of water (H) contaminated with sulfate ions and with heavy metal ions, the water (H) being collected (20) in a water reservoir (W), and a substance (B) having a basic action in water being supplied (21) to the water (H) in the water reservoir (W) in an amount raising a pH value of the water (H), in such a way that a precipitation substance having heavy metal ions is precipitated out of the water (H),
- at least one water part quantity being extracted (22) from the water reservoir (W) and being separated (24) by means of a filter device (5) into clean water (R), essentially freed of sulfate ions and of heavy metal ions, and into dirty water (S), enriched with sulfate ions and heavy metal ions, and
- the dirty water (S) being at least partially recirculated (25) into the water reservoir (W), with the result that a concentration of sulfate ions in the water reservoir increases, and after reaching the solubility limit a precipitation substance having sulfate ions is precipitated out of the water (H).

2. Method according to Claim 1, **characterized in that** the water (H) and the basically acting substance (B) supplied are intermixed (26).

3. Method according to Claim 1 or 2, **characterized in that** the water part quantity is prefiltered (23) during extraction.

4. Method according to one of Claims 1 to 3, **characterized in that** the water part quantity is separated (24) by a filter device (5) into clean water (R) and dirty water (S), which filter device (5) is based on a reverse osmosis and/or a nanofiltration.

5. Method according to one of Claims 1 to 4, **characterized in that** the substance (B) having a basic action in water is a hydroxide compound.

6. Method according to one of Claims 1 to 5, **characterized in that** precipitation substance (F), comprising the precipitation substance having heavy metal ions and the precipitation substance having sulfate ions, is collected (27) in a collecting region (SB) of the water reservoir (W).

7. Method according to one of Claims 1 to 6, **characterized in that** precipitation substance (F), comprising the precipitation substance having heavy metal ions and the precipitation substance having sulfate ions, is discharged (28) continuously from the water reservoir (W).

8. Method according to Claim 7, **characterized in that** discharged precipitation substance (F), comprising the precipitation substance having heavy metal ions and the precipitation substance having sulfate ions, is dewatered (29).

9. Apparatus for carrying out a method according to one of Claims 1 to 8 in which water (H), contaminated with sulfate ions and with heavy metal ions, is purified in a water reservoir (W) comprising a receptacle (1, 1') for the water (H) with a mixing region (MB) and a collecting region (SB) for a precipitation substance (F) comprising the precipitation substance having heavy metal ions and the precipitation substance having sulfate ions, with a device (2) for the supply of a substance (B) having a basic action in water into the mixing region (MB), with a device (3, 4) for the extraction of water (H) from the water reservoir (W), with a filter device (5) for filtering the extracted water (H) into clean water (R), essentially freed of sulfate ions and heavy metal ions, and into dirty water (S), enriched with sulfate ions and with heavy metal ions, and with a recirculation of the dirty water (S) from the filter device (5) into the water reservoir (W).

10. Apparatus according to Claim 9, **characterized in that** the water extraction takes place in an extraction region (EB) of the water reservoir (W) and a mixing of the substance (B) having a basic action in water (H) with water (H) takes place in the mixing region (MB) of the water reservoir (W), an intermixing of water (H) from the extraction region (EB) with water (H) from the mixing region (MB) being reduced.

11. Apparatus according to Claim 9 or 10, **characterized in that** a device (8) for the mixing of substance (B) having a basic action in water with water (H) is provided.

12. Apparatus according to one of Claims 9 to 11, **characterized in that** the water extraction device (3) has at least one microfiltration element (4) and/or at least one floatation cell.

13. Apparatus according to one of Claims 9 to 12, **characterized in that** the filter device (5) comprises at least one nanofiltration stage (6) and/or at least one reverse osmosis filter (7).

14. Apparatus according to one of Claims 9 to 13, **characterized in that** the filter device (5) and/or the water extraction device (3) have/has a membrane permeable to clean water (R), a cleaning device (9) for the membrane being provided, a cleaning of the membrane being capable of being brought about by means of a magnetic field.

15. Apparatus according to one of Claims 9 to 14, **characterized in that** the recirculation is designed such that the dirty water (S) is recirculated into the mixing region (MB).

16. Apparatus according to one of Claims 9 to 15, **characterized in that** the precipitation substance (F) collected in the collecting region (SB) can be discharged by means of a discharge device (13).

17. Apparatus according to Claim 16, **characterized in that** the discharged precipitation substance (F) can be dewatered by means of a dewatering device (10).

18. Apparatus according to Claim 17, **characterized in that** the dewatering device (10) is designed as a filter press and/or as a band filter.

19. Apparatus according to one of Claims 9 to 18, **characterized in that** the receptacle (1, 1') is a catching tank (1).

20. Apparatus according to one of Claims 9 to 18, **characterized in that** the receptacle (1, 1') is a purifying vessel (1').

21. Use of the apparatus according to one of Claims 9 to 20 for the purification of waste water occurring during the quarrying of raw materials in mines with sulfur-containing soil.

## Revendications

1. Procédé de purification d'eau ( H ) polluée par des ions sulfates et par des ions de métal lourd,
dans lequel on rassemble ( 20 ) l'eau ( H ) dans un réservoir ( W ) d'eau et on ajoute ( 21 ) à l'eau ( H ) dans le réservoir ( W ) d'eau une substance ( B ) à effet basique dans l'eau, en une quantité augmentant le pH de l'eau ( H ) de manière à précipiter dans l'eau ( H ) une substance de précipitation comportant des ions de métal lourd,
- dans lequel on prélève ( 22 ) au moins une quantité partielle d'eau du réservoir ( W ) d'eau et, au moyen d'un dispositif ( 5 ) de filtration, on la sépare ( 24 ) en de l'eau ( R ) propre, débarrassée sensiblement d'ion sulfate et d'ion de métal lourd et en eau ( S ) sale, enrichie en ions sulfates et en ions de métal lourd, et
- dans lequel on retourne ( 25 ) l'eau ( S ) sale au moins en partie au réservoir ( W ) d'eau en augmentant ainsi une concentration en ions sulfates dans le réservoir d'eau et, après avoir atteint la limite de solubilité, on précipite dans l'eau ( H ) une substance de précipitation comportant des ions sulfates.

2. Procédé suivant la revendication 1,
**caractérisé en ce que** l'on mélange l'eau ( H ) et la substance ( B ) à effet basique qui est ajoutée.

3. Procédé suivant la revendication 1 ou 2
**caractérisé en ce que** l'on filtre ( 23 ) au préalable la quantité partielle d'eau lors du prélèvement.

4. Procédé suivant l'une des revendications 1 à 3,
**caractérisé en ce que** l'on sépare ( 24 ) la quantité partielle d'eau par un dispositif ( 5 ) de filtration en de l'eau ( R ) propre et en de l'eau ( S ) sale, le dispositif de filtration reposant sur une osmose inverse et/ou sur une nanofiltration.

5. Procédé suivant l'une des revendications 1 à 4,
**caractérisé en ce que** la substance ( B ) à effet basique dans l'eau est un composé hydroxyde.

6. Procédé suivant l'une des revendications 1 à 5,
**caractérisé en ce que** l'on rassemble ( 27 ), dans une zone ( SB ) collectrice du réservoir ( W ) d'eau, de la substance ( F ) de précipitation comprenant la substance de précipitation comportant des ions de métal lourd et la substance de précipitation comportant des ions sulfates.

7. Procédé suivant l'une des revendications 1 à 6,
**caractérisé en ce que** l'on évacue du réservoir ( W ) d'eau, en continu, de la substance ( F ) de précipitation comprenant la substance de précipitation comportant des ions de métal lourd et la substance de précipitation comportant des ions sulfates.

8. Procédé suivant la revendication 7,
**caractérisé en ce que** l'on sépare ( 29 ) de l'eau de la substance ( F ) de précipitation évacuée comprenant la substance de précipitation comportant des ions de métal lourd et la substance de précipitation comportant des ions sulfates.

9. Installation pour la mise en ouvre d'un procédé suivant l'une des revendications 1 à 8, pour purifier de l'eau ( H ) polluée par des ions sulfates et par des ions de métal lourd dans un réservoir ( W ) d'eau, comprenant une réception ( 1, 1' ) pour l'eau ( H ), ayant une zone ( MB ) de mélange et une zone ( SB ) de collecte d'une substance ( F ) de précipitation comprenant la substance de précipitation comportant des ions de métal lourd et la substance de précipitation comportant des ions sulfates, comprenant un dispositif ( 2 ) d'envoi d'une substance ( B ) à effet basique dans l'eau à la zone ( MB ) de mélange, comprenant un dispositif ( 3, 4 ) de prélèvement d'eau ( H ) du réservoir ( W ) d'eau, comprenant un dispositif ( 5 ) de filtration pour la filtration de l'eau ( H ) prélevée en de l'eau ( R ) propre, débarrassée sensiblement d'ion sulfate et d'ion de métal lourd et en de l'eau ( S ) sale, enrichie en ions sulfates et en ions de métal lourd et comprenant un retour de l'eau ( S ) sale du dispositif ( 5 ) de filtration au réservoir ( W ) d'eau.

10. Installation suivant la revendication 9,
**caractérisée en ce que** la réception d'eau s'effectue dans une zone ( EB ) de prélèvement du réservoir ( W ) d'eau et un mélange à l'eau ( H ) de la substance ( B ) à effet basique dans l'eau ( H ) s'effectue dans la zone ( MB ) de mélange du réservoir ( W ) d'eau, un mélange d'eau ( H ) provenant de la zone ( EB ) de prélèvement à de l'eau ( H ) provenant de la zone ( MB ) de mélange étant réduit.

11. Installation suivant la revendication 9 ou 10,
**caractérisée en ce qu'**il est prévu un dispositif ( 8 ) de mélange à l'eau ( H ) de la substance ( B ) à effet basique dans l'eau.

12. Installation suivant l'une des revendications 9 à 11,
**caractérisée en ce que** le dispositif ( 3 ) de prélèvement d'eau comporte au moins un élément ( 4 ) de microfiltration et/ou au moins une cellule de flottation.

13. Installation suivant l'une des revendications 9 à 12,
**caractérisée en ce que** le dispositif ( 5 ) de filtration comprend au moins un étage ( 6 ) de nanofiltration et/ou au moins un filtre ( 16 ) d'osmose inverse.

14. Installation suivant l'une des revendications 9 à 13,
**caractérisée en ce que** le dispositif ( 5 ) de filtration et/ou le dispositif ( 3 ) de prélèvement d'eau comporte une membrane perméable à de l'eau ( R ) propre, un dispositif ( 9 ) de nettoyage de la membrane étant prévu, un nettoyage de la membrane pouvant être réalisé au moyen d'un champ magnétique.

15. Installation suivant l'une des revendications 9 à 14,
**caractérisé en ce que** le retour est constitué de tel façon que l'eau ( S ) sale est retournée à la zone ( MB ) de mélange.

16. Installation suivant l'une des revendications 9 à 15, **caractérisé en ce que** la substance ( F ) de précipitation rassemblée dans la zone
( SB ) de collecte peut être évacuée au moyen d'un dispositif ( 13 ) d'évacuation.

17. Installation suivant la revendication 16,
**caractérisée en ce que** de l'eau peut être séparée de la substance ( F ) de précipitation évacuée au moyen d'un dispositif ( 10 ) de séparation.

18. Installation suivant la revendication 17,
**caractérisée en ce que** le dispositif ( 10 ) de séparation est constitué sous la forme d'un filtre-presse et/ou d'un filtre à bande.

19. Installation suivant l'une des revendications 9 à 18,
**caractérisé en ce que** la réception ( 1, l' ) est un bassin ( 1 ) de captage.

20. Installation suivant l'une des revendications 9 à 18,
**caractérisé en ce que** la réception ( 1, 1' ) est une cuve ( 1' ) d'épuration.

21. Utilisation d'installation suivant l'une des revendications 9 à 20, pour la purification d'eaux résiduaires se produisant lors de l'abattage de matières premières dans des mines ayant un fond soufré.
